# FASCICULE DE BREVET EUROPEEN

(11) **EP 3 521 603 B1**
(45) Date de publication et mention de la délivrance du brevet: **23.12.2020**
(21) Numéro de dépôt: 19151302.7
(22) Date de dépôt: 11.01.2019
(51) Int. Cl.: F02K 1/72, F02K 1/76, F02K 1/09

(54) **NACELLE D'UN TURBOREACTEUR COMPORTANT UNE PORTE EXTERIEURE D'INVERSION**
NACELLE EINES TURBOJET-MOTORS MIT EINER AUSSENSCHUBUMKEHRTÜR
NACELLE OF A TURBOJET ENGINE COMPRISING AN EXTERIOR THRUST REVERSER DOOR

(30) Priorité: 05.02.2018 FR 1850928
(43) Date de publication de la demande: 07.08.2019
(73) Titulaire: Airbus (S.A.S.), 31700 Blagnac (FR)
(72) Inventeur: OBERLE, Patrick, 82600 VERDUN SUR GARONNE (FR)
(74) Mandataire: Gicquel, Olivier Yves Gérard

(56) Documents cités:
- EP-A2- 2 573 375
- WO-A1-2016/146936
- US-A- 3 815 357

## Description

La présente invention concerne une nacelle d'un turboréacteur double flux qui comporte au moins une porte extérieure d'inversion, un turboréacteur double flux comportant une telle nacelle et un moteur, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur.

La nacelle comporte au moins une porte d'inversion qui est mobile en rotation sur la structure de la nacelle entre une position fermée dans laquelle elle vient en continuité avec la surface extérieure de la nacelle et une position ouverte dans laquelle elle ouvre une fenêtre dans la paroi de la nacelle pour expulser l'air du flux secondaire vers l'extérieur.

Ainsi en position ouverte, la porte d'inversion détourne une partie du flux secondaire vers l'extérieur par la fenêtre.

Bien que le mécanisme d'une telle porte d'inversion donne entière satisfaction, il est souhaitable de trouver des mécanismes différents.

Une nacelle pour un turboréacteur double flux selon l'art antérieur est divulguée dans le document WO 2016/146936 A1.

Un objet de la présente invention est de proposer une nacelle comportant au moins une porte extérieure d'inversion avec un mécanisme d'ouverture différent.

A cet effet, est proposée une nacelle pour un turboréacteur double flux telle que revendiquée dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention,
la Fig. 2 est une vue en perspective de la nacelle selon l'invention en position ouverte,
la Fig. 3 est une coupe par un plan radial d'une porte extérieure d'inversion en position fermée de la nacelle selon l'invention,
la Fig. 4 est une vue similaire à la Fig. 3 en position ouverte de la porte extérieure d'inversion,
la Fig. 5 montre une coupe selon la ligne V-V de la Fig. 3,
la Fig. 6 est une vue de côté d'une porte intérieure d'inversion de la nacelle selon l'invention en position ouverte et en position fermée, et
la Fig. 7 est une vue en perspective d'une partie de la porte intérieure d'inversion.

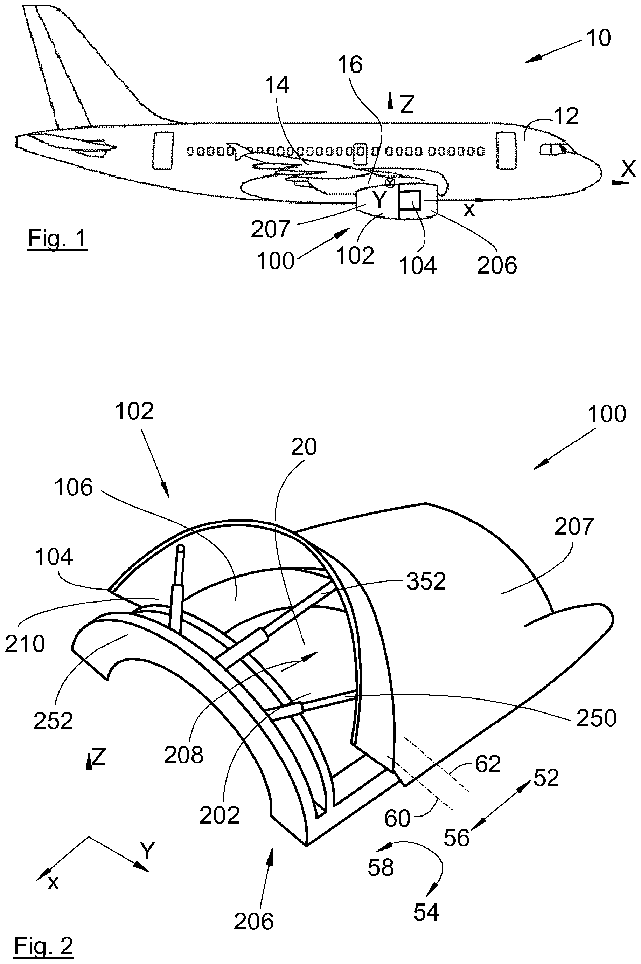

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

La Fig. 2 montre une nacelle 102 selon l'invention.

Le turboréacteur double flux 100 comporte une nacelle 102 et un moteur 20 qui est logé à l'intérieur de la nacelle 102.

Comme cela est montré sur la Fig. 2, le turboréacteur double flux 100 présente une veine 202 entre la nacelle 102 et le moteur 20 dans laquelle circule le flux secondaire 208.

Dans la description qui suit, et par convention, on appelle x l'axe longitudinal de la nacelle 102 qui est parallèle à l'axe longitudinal X de l'aéronef 10 ou axe de roulis, orienté positivement dans le sens d'avancement de l'aéronef 10, on appelle Y l'axe transversal ou axe de tangage de l'aéronef qui est horizontal lorsque l'aéronef est au sol, et Z l'axe vertical ou hauteur verticale ou axe de lacet lorsque l'aéronef est au sol, ces trois directions X, Y et Z étant orthogonales entre elles et formant un repère orthonormé ayant pour origine le centre de gravité de l'aéronef.

La nacelle 102 comporte au moins une porte extérieure d'inversion 104. En particulier, il peut y avoir deux portes extérieures d'inversion 104 disposées l'une en face de l'autre, ou quatre portes extérieures d'inversion 104 réparties régulièrement sur la périphérie de la nacelle 102.

Dans la description qui suit, l'invention est plus particulièrement décrite pour une porte extérieure d'inversion 104, mais elle s'applique de la même manière pour chaque porte extérieure d'inversion 104 lorsqu'il y en a plusieurs.

Pour chaque porte extérieure d'inversion 104, la nacelle 102 comporte une porte intérieure d'inversion 106 disposée à l'intérieur de la nacelle 102 par rapport à la porte extérieure d'inversion 104. Comme cela est expliqué ci-dessous, la porte intérieure d'inversion 106 et la porte extérieure d'inversion 104 permettent de dévier le flux secondaire 208 vers l'avant de l'aéronef 10 pour ralentir.

La nacelle 102 présente pour chaque couple constitué d'une porte extérieure d'inversion 104 et d'une porte intérieure d'inversion 106, une fenêtre 210 ouverte entre la veine 202 et l'extérieur de la nacelle 102.

La nacelle 102 présente un capot fixe 206 qui délimite la fenêtre 210 en amont par rapport à l'axe longitudinal x et qui est monté fixe sur une structure de la nacelle 102.

La nacelle 102 présente un capot mobile 207 qui délimite la fenêtre 210 en aval par rapport à l'axe longitudinal x. Le capot mobile 207 est monté mobile en translation sur la structure selon une direction de translation globalement parallèle à l'axe longitudinal x sur la structure de la nacelle 102. La translation est réalisée par tous moyens appropriés comme par exemple des glissières entre la structure de la nacelle 102 et le capot mobile 207.

Le capot fixe 206 et le capot mobile 207 présentent une surface extérieure qui constitue l'enveloppe extérieure de la nacelle 102.

Le capot mobile 207 est mobile entre une position de fermeture dans laquelle il est rapproché du capot fixe 206 et une position d'ouverture dans laquelle il est éloigné du capot fixe 206 vers l'arrière de manière à élargir la fenêtre 210.

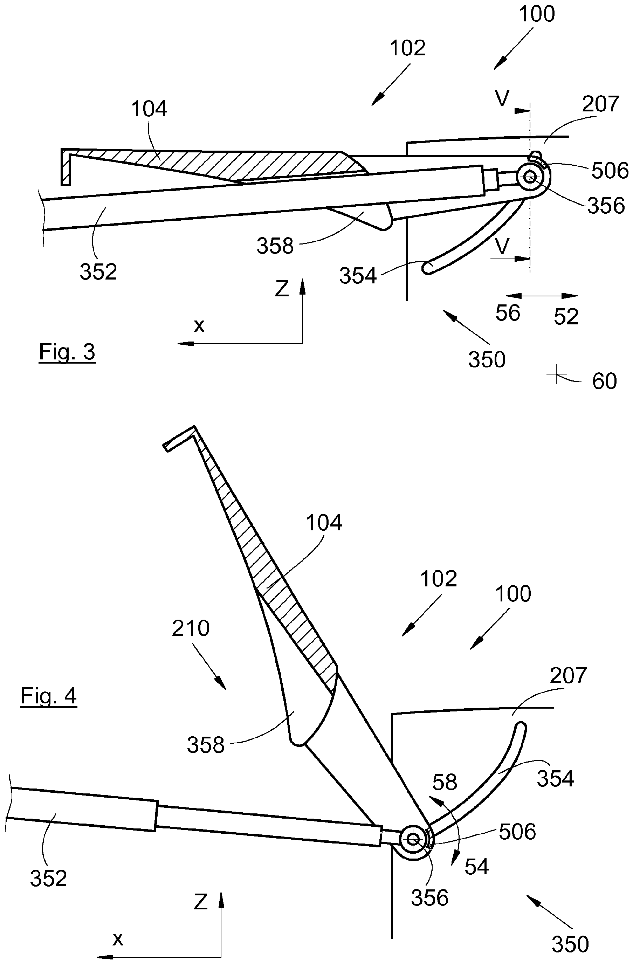

La porte extérieure d'inversion 104 est montée mobile en rotation autour d'un premier axe de rotation 60 sur la structure de la nacelle 102 entre une position fermée dans laquelle elle obture la fenêtre 210 et une position ouverte dans laquelle elle n'obture pas la fenêtre 210. Dans le mode de réalisation de l'invention présenté sur les Figs. 2 et 3, le premier axe de rotation 60 est perpendiculaire à l'axe longitudinal x et est localisé au niveau des extrémités latérales de la porte extérieure d'inversion 104.

De la même manière, la porte intérieure d'inversion 106 est mobile en rotation autour d'un deuxième axe de rotation 62 sur la structure de la nacelle 102 entre une position escamotée dans laquelle elle se positionne autour de la veine 202 et une position active dans laquelle elle se positionne en travers de la veine 202 pour dévier le flux secondaire 208 vers la fenêtre. En position active, la porte intérieure d'inversion 106 prolonge ainsi la porte extérieure d'inversion 104 en position ouverte dans la veine 202 jusqu'au moteur 20 pour dévier au mieux le flux secondaire 208. Dans le mode de réalisation de l'invention présenté sur les Figs., le deuxième axe de rotation 62 est ici perpendiculaire à l'axe longitudinal x et est localisé au niveau des extrémités latérales de la porte intérieure d'inversion 106.

En position fermée, la porte extérieure d'inversion 104 se positionne entre le capot fixe 206 et le capot mobile 207 qui est en position de fermeture et la porte extérieure d'inversion 104 prolonge le capot mobile 207, et le capot fixe 206 prolonge la porte extérieure d'inversion 104. En position ouverte, le capot mobile 207 est déplacé vers l'arrière pour faciliter la manœuvre de la porte extérieure d'inversion 104 qui passe de la position fermée à la position ouverte.

Lorsque la porte extérieure d'inversion 104 est en position fermée, la surface extérieure de la porte extérieure d'inversion 104 s'étend entre la surface extérieure du capot fixe 206 et la surface extérieure du capot mobile 207.

Lorsque la porte extérieure d'inversion 104 est en position ouverte, la porte extérieure d'inversion 104 vient, au moins en partie, en travers de la veine 202 et dévie au moins une partie du flux secondaire 208 vers l'extérieur à travers la fenêtre 210.

En position escamotée, la porte intérieure d'inversion 106 se positionne entre le capot fixe 206 et le capot mobile 207 qui est en position de fermeture et la porte intérieure d'inversion 106 prolonge le capot mobile 207, et le capot fixe 206 prolonge la porte intérieure d'inversion 106. En position active, le capot mobile 207 est déplacé vers l'arrière pour faciliter la manœuvre de la porte intérieure d'inversion 106 qui passe de la position escamotée à la position active.

Lorsque la porte intérieure d'inversion 106 est en position escamotée, la surface intérieure de la porte intérieure d'inversion 106 s'étend entre la surface intérieure du capot fixe 206 et la surface intérieure du capot mobile 207 pour constituer la paroi extérieure de la veine 202.

Lorsque la porte intérieure d'inversion 106 est en position active, la porte intérieure d'inversion 106 vient en travers de la veine 202 et dévie au moins une partie du flux secondaire 208 vers la fenêtre 210.

Les Figs. 3 et 4 montrent la coordination entre le passage de la position fermée à la position ouverte de la porte extérieure d'inversion 104 avec le passage de la position de fermeture à la position d'ouverture du capot mobile 207.

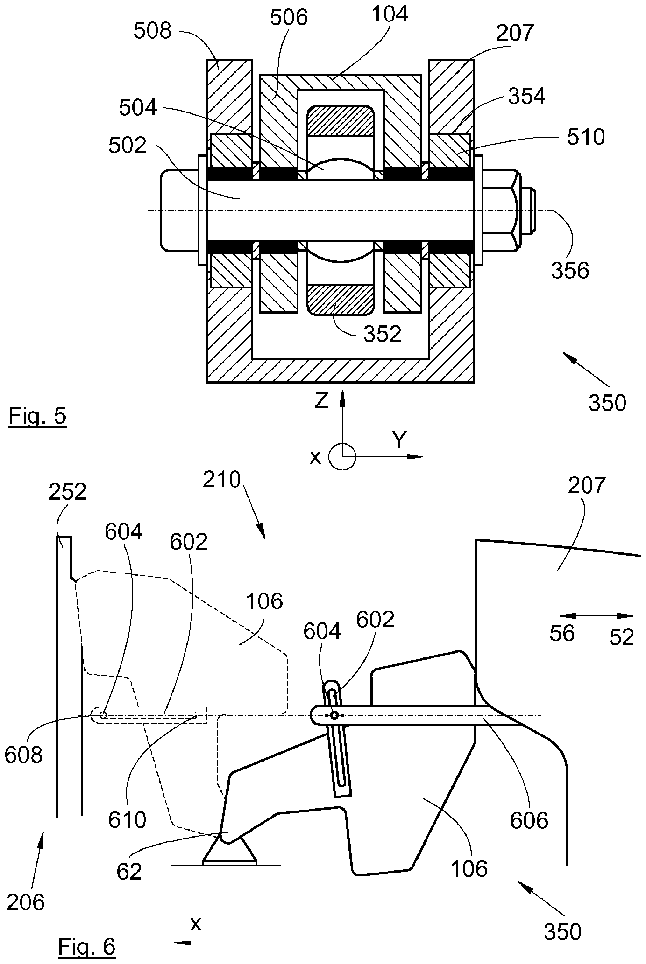

Cette coordination est assurée par un mécanisme d'entraînement 350 et la Fig. 5 montre un détail du mécanisme d'entraînement 350.

Le mécanisme d'entraînement 350 réalise, à partir de la position fermée et de la position de fermeture, une première combinaison assurant :
- une translation vers l'arrière (flèche 52) du capot mobile 207 selon une direction de translation globalement parallèle à l'axe longitudinal x qui assure le déplacement du capot mobile 207 de la position de fermeture à la position d'ouverture, et
- une rotation (flèche 54) de la porte extérieure d'inversion 104 autour du premier axe de rotation 60 qui assure le déplacement de la porte extérieure d'inversion 104 de la position fermée à la position ouverte.

A l'inverse, le passage de la position ouverte à la position fermée de la porte extérieure d'inversion 104 est assuré par le même mécanisme d'entraînement 350 qui est également prévu pour réaliser une deuxième combinaison assurant à partir de la position ouverte et de la position d'ouverture :
- une rotation (flèche 58) en sens inverse de la porte extérieure d'inversion 104 autour du premier axe de rotation 60 qui assure le retour de la porte extérieure d'inversion 104 de la position ouverte à la position fermée, et
- une translation vers l'avant (flèche 56) du capot mobile 207 selon la direction de translation qui assure le déplacement du capot mobile 207 de la position d'ouverture à la position de fermeture.

Le mécanisme d'entraînement 350 comporte un seul vérin 352 disposé au niveau d'un plan médian xZ du capot mobile 207 globalement parallèle au plan XZ afin d'assurer un déplacement équilibré du capot mobile 207. Le plan médian du capot mobile 207 correspond également au plan médian de la porte extérieure d'inversion 104 et de la porte intérieure d'inversion 106. Le vérin 352 peut être électrique, hydraulique, pneumatique ou autre. Le mécanisme d'entraînement 350 comporte une unité de contrôle, du type processeur, qui commande l'allongement et le raccourcissement du vérin 352 selon les besoins de l'aéronef 10.

Le vérin 352 présente une première extrémité, ici le cylindre du vérin 352, qui est montée articulée sur la structure de la nacelle 102, en particulier avec le cadre avant 252.

Une deuxième extrémité du vérin 352, ici la tige du vérin 352, est montée articulée sur la porte extérieure d'inversion 104 autour d'un troisième axe de rotation 356 parallèle au premier axe de rotation 60 et à distance de celui-ci comme le montre la Fig. 3.

A cette fin, le mécanisme d'entraînement 350 comporte un arbre 502 coaxial avec le troisième axe de rotation 356 et sur lequel la deuxième extrémité du vérin 352 est montée articulée, ici par l'intermédiaire d'une rotule 504.

Le mécanisme d'entraînement 350 comporte également une première chape 506 qui est solidaire de la porte extérieure d'inversion 104 et qui est montée libre en rotation sur l'arbre 502 afin de réaliser la libre rotation de la porte extérieure d'inversion 104 autour du troisième axe de rotation 356. L'arbre 502 est ainsi emmanché dans les deux alésages de la première chape 506.

Le capot mobile 207 présente deux rainures 354 dans lesquelles l'arbre 502 est monté coulissant parallèlement au plan médian xZ. A cette fin, le mécanisme d'entraînement 350 présente une deuxième chape 508 solidaire du capot mobile 207 et à l'extérieur de la première chape 506 dont chacun des deux flancs présente une rainure 354. Chaque rainure 354 est dans un plan parallèle au plan médian xZ.

Le positionnement central du vérin 352 et la présence des deux chapes 506 et 508 permettent d'équilibrer et de minimiser les forces enjeu.

Afin d'assurer un meilleur coulissement de l'arbre 502 dans les rainures 354, pour chaque rainure 354, l'arbre 502 porte une roue 510 qui roule dans ladite rainure 354.

Afin d'assurer une meilleure rotation des différents éléments sur l'arbre 502, des coussinets peuvent être prévus autour de l'arbre 502 et des rondelles peuvent être prévues entre les différents éléments.

Le fonctionnement consiste alors à partir de la position fermée et de la position de fermeture, à actionner le vérin 352 pour l'allonger ce qui entraîne le déplacement de la porte extérieure d'inversion 104 par action du vérin 352 sur la première chape 506, et du capot mobile 207 par action de l'arbre 502 et ici des roues 510 qui se déplacent avec le vérin 352 sur les rainures 354.

Le capot mobile 207 se déplace ainsi de la position de fermeture à la position d'ouverture et dans le même temps, du fait du déplacement du troisième axe de rotation 356 par rapport au premier axe de rotation 60, la porte extérieure d'inversion 104 pivote autour du premier axe de rotation 60 de la position fermée à la position ouverte.

La forme de chaque rainure 354 est appropriée pour suivre le déplacement de l'arbre 502 au cours de l'allongement du vérin 352. Chaque rainure 354 est ici arquée et progresse de l'extérieur vers l'intérieur de la nacelle 102 en progressant de l'arrière vers l'avant de la nacelle 102. Bien sûr en fonction des géométries des différents éléments, la forme de chaque rainure 350 peut être différente.

Afin de permettre un bon positionnement de la porte extérieure d'inversion 104 et éviter les interactions avec le vérin 352, la porte extérieure d'inversion 104 présente au niveau de son plan médian un évidement 358 dans lequel loge le vérin 352 en position fermée de la porte extérieure d'inversion 104.

Afin d'éviter un déplacement trop important de la porte extérieure d'inversion 104 en position ouverte du fait de la prise au vent, des moyens de blocage 250 sont agencés pour empêcher la porte extérieure d'inversion 104 de dépasser une position d'ouverture maximale. Les moyens de blocage 250 peuvent être des butées contre lesquelles la porte extérieure d'inversion 104 s'appuie en position d'ouverture maximale, mais dans le mode de réalisation de l'invention présenté à la Fig. 2, les moyens de blocage 250 prennent la forme de deux tiges télescopiques qui présentent un allongement maximum lorsque la porte extérieure d'inversion 104 est en position d'ouverture maximale.

La Fig. 6 montre le déplacement de la porte intérieure d'inversion 106 de la position escamotée (en traits pointillés) à la position active (en traits pleins) qui est réalisé par le mécanisme d'entraînement 350.

Le déplacement de la porte intérieure d'inversion 106 consiste en une rotation autour du deuxième axe de rotation 62.

Le mécanisme d'entraînement 350 est prévu pour que la rotation de la porte intérieure d'inversion 106 commence un certain temps après le début du déplacement en translation du capot mobile 207. Ainsi, à partir de la position de fermeture et de la position escamotée, le mécanisme d'entraînement 350 réalise d'abord la translation vers l'arrière (flèche 52) du capot mobile 207 comme expliqué ci-dessus puis après un certain temps, une rotation (flèche 64) de la porte intérieure d'inversion 106 autour du deuxième axe de rotation 62 qui assure le déplacement de la porte intérieure d'inversion 106 de la position escamotée à la position active tandis que le mouvement vers l'arrière du capot mobile 207 se poursuit jusqu'à la position d'ouverture. Ainsi à partir de la position d'ouverture et de la position active, le mécanisme d'entraînement 350 réalise la translation vers l'avant (flèche 56) du capot mobile 207 comme expliqué ci-dessus et une rotation (flèche 68) de la porte intérieure d'inversion 106 autour du deuxième axe de rotation 62 de la position active à la position escamotée, et lorsque la porte intérieure d'inversion 106 est dans la position escamotée, elle s'arrête et le mouvement vers l'avant du capot mobile 207 se poursuit jusqu'à la position de fermeture.

De la même manière, le déplacement de la porte intérieure d'inversion 106 de la position escamotée à la position active est décalé par rapport au déplacement de la porte extérieure d'inversion 104 de la position fermée à la position ouverte.

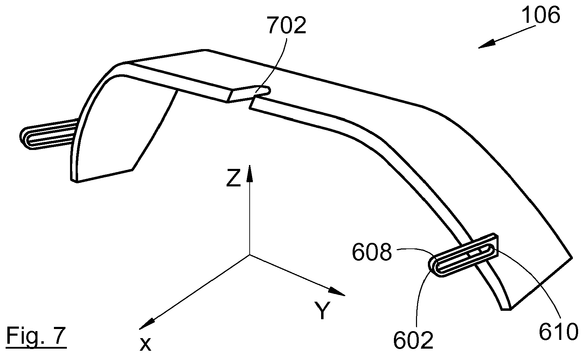

Comme le montre également la Fig. 7, le mécanisme d'entraînement 350 comporte deux glissières 602 solidaires de la porte intérieure d'inversion 106 et qui s'étendent parallèlement à la direction de translation du capot mobile 207 lorsque la porte intérieure d'inversion 106 est en position escamotée. Chaque glissière 602 présente une extrémité distale 608 orientée vers l'avant de la nacelle 102 et une extrémité proximale 610 orientée vers l'arrière de la nacelle 102.

Les glissières 602 sont ici agencées au niveau des extrémités latérales de la porte intérieure d'inversion 106.

Pour chaque glissière 602, le mécanisme d'entraînement 350 comporte également un coulisseau 604 solidaire du capot mobile 207, ici par l'intermédiaire d'un bras 606 qui est représenté uniquement en position d'ouverture du capot mobile 207.

Le coulisseau 604 qui prend ici la forme d'un plot, est prévu pour pouvoir se déplacer dans la glissière 602 entre l'extrémité distale 608 et l'extrémité proximale 610.

Comme cela est vu sur la Fig. 6, le coulisseau 604 est contre l'extrémité distale lorsque la porte intérieure d'inversion 106 est en position escamotée et que le capot mobile 207 est en position de fermeture.

En complément du fonctionnement décrit pour la porte extérieure d'inversion 104, le fonctionnement consiste ainsi à partir de la position fermée/de fermeture/escamotée à actionner le vérin 352 pour l'allonger ce qui entraîne le déplacement de la porte extérieure d'inversion 104 et du capot mobile 207, ainsi que du coulisseau 604 qui se déplace selon la direction de translation de l'extrémité distale 608 vers l'extrémité proximale 610. Durant ce déplacement, la porte intérieure d'inversion 106 reste immobile. Lorsque le coulisseau 604 atteint l'extrémité proximale 610, la poursuite de l'allongement du vérin 352 entraîne le basculement de la porte intérieure d'inversion 106 du fait que le coulisseau 604 est prisonnier de la glissière 602. Le basculement de la porte intérieure d'inversion 106 se poursuit jusqu'à la position active tant que le vérin 352 s'allonge et que le capot mobile 207 atteint la position d'ouverture.

A l'inverse, à partir de la position ouverte/d'ouverture/active, le vérin 352 se raccourcit, ce qui entraîne le déplacement de la porte extérieure d'inversion 104 et du capot mobile 207, ainsi que du coulisseau 604 qui est prisonnier de la glissière 602, ce qui entraîne le basculement de la porte intérieure d'inversion 106 vers sa position escamotée. Lorsque la position escamotée est atteinte, le coulisseau 604 se déplace selon la direction de translation de l'extrémité proximale 610 vers l'extrémité distale 608. Durant ce déplacement, la porte intérieure d'inversion 106 reste immobile tandis que le vérin 352 continue à se raccourcir entraînant la porte extérieure d'inversion 104 vers sa position fermée et le capot mobile 207 vers sa position de fermeture.

Afin d'éviter les interactions entre la porte intérieure d'inversion 106 et le vérin 352 lors du basculement de la porte intérieure d'inversion 106, celle-ci présente au niveau de son plan médian une échancrure 702 qui permet le passage dudit vérin 352.

## Revendications

1. Nacelle (102) pour un turboréacteur double flux (100), ladite nacelle (102) comportant :
- une structure,
- un capot fixe (206) monté fixe sur la structure,
- un capot mobile (207) monté mobile en translation sur la structure selon une direction de translation entre une position de fermeture dans laquelle il est rapproché du capot fixe (206) et une position d'ouverture dans laquelle il est éloigné du capot fixe (206) vers l'arrière,
- une fenêtre (210) délimitée en amont par le capot fixe (206) et en aval par le capot mobile (207), ladite fenêtre (210) étant ouverte entre une veine (202) d'un flux secondaire (208) et l'extérieur de la nacelle (102),
- une porte extérieure d'inversion (104) présentant un plan médian (xZ) et montée mobile en rotation autour d'un premier axe de rotation (60) sur la structure entre une position fermée dans laquelle elle obture la fenêtre (210) et une position ouverte dans laquelle elle n'obture pas la fenêtre (210), et
- un mécanisme d'entraînement (350) prévu pour coordonner le passage de la position fermée à la position ouverte de la porte extérieure d'inversion (104) avec le passage de la position de fermeture à la position d'ouverture du capot mobile (207) et inversement, ledit mécanisme d'entraînement (350) comportant :
- un seul vérin (352) disposé au niveau du plan médian (xZ), présentant une première extrémité montée articulée sur la structure,
- un arbre (502) présentant un axe, dit troisième axe de rotation (356), parallèle au premier axe de rotation (60) et à distance de celui-ci, et où la deuxième extrémité du vérin (352) est montée articulée sur l'arbre (502),
- une première chape (506) solidaire de la porte extérieure d'inversion (104) et montée libre en rotation sur l'arbre (502) autour du troisième axe de rotation (356), et
- une deuxième chape (508) solidaire du capot mobile (207) et où chacun des deux flancs de la deuxième chape (508) présente une rainure (354) dans chacune desquelles l'arbre (502) est monté coulissant parallèlement au plan médian.

2. Nacelle (102) selon la revendication 1, **caractérisée en ce que** pour chaque rainure (354), l'arbre (502) porte une roue (510) qui roule dans ladite rainure (354).

3. Nacelle (102) selon l'une des revendications précédentes, **caractérisée en ce que** la porte extérieure d'inversion (104) présente au niveau de son plan médian un évidement (358) dans lequel loge le vérin (352) en position fermée de la porte extérieure d'inversion (104).

4. Nacelle (102) selon l'une des revendications précédentes, **caractérisée en ce qu'**elle comporte des moyens de blocage (250) agencés pour empêcher la porte extérieure d'inversion (104) de dépasser une position d'ouverture maximale.

5. Nacelle (102) selon l'une des revendications précédentes, **caractérisée en ce qu'**elle comporte une porte intérieure d'inversion (106) disposée à l'intérieur de la nacelle (102) par rapport à la porte extérieure d'inversion (104) et montée mobile en rotation autour d'un deuxième axe de rotation (62) sur la structure entre une position escamotée dans laquelle elle se positionne autour de la veine (202) et une position active dans laquelle elle se positionne en travers de la veine (202), **en ce que** le mécanisme d'entraînement (350) comporte deux glissières (602) solidaires de la porte intérieure d'inversion (106) et qui s'étendent parallèlement à la direction de translation du capot mobile (207) lorsque la porte intérieure d'inversion (106) est en position escamotée, **en ce que** chaque glissière (602) présente une extrémité distale (608) orientée vers l'avant de la nacelle (102) et une extrémité proximale (610) orientée vers l'arrière de la nacelle (102), et **en ce que** le mécanisme d'entraînement (350) comporte, pour chaque glissière (602), un coulisseau (604) solidaire du capot mobile (207) et prévu pour pouvoir se déplacer dans la glissière (602) entre l'extrémité distale (608) et l'extrémité proximale (610).

6. Nacelle (102) selon la revendication 5, **caractérisée en ce que** la porte intérieure d'inversion (106) présente au niveau de son plan médian une échancrure (702) qui permet le passage du vérin (352).

7. Turboréacteur double flux (100) comportant un moteur (20) et une nacelle (102) selon l'une des revendications précédentes entourant le moteur (20), et où une veine (202) d'un flux secondaire (208) est délimitée entre la nacelle (102) et le moteur (20).

8. Aéronef (10) comportant au moins un turboréacteur double flux (100) selon la revendication précédente.

## Patentansprüche

1. Gondel (102) für ein Zweistrom-Turbinenstrahltriebwerk (100), wobei die Gondel (102) Folgendes umfasst:
- eine Struktur,
- eine feste Abdeckung (206), die fest an der Struktur montiert ist,
- eine bewegliche Abdeckung (207), die an der Struktur in einer Translationsrichtung zwischen einer Schließposition, in der sie der festen Abdeckung (206) näher liegt, und einer Öffnungsposition, in der sie von der festen Abdeckung (206) nach hinten entfernt ist, translatorisch bewegbar montiert ist,
- ein Fenster (210), das stromaufwärts durch die feste Abdeckung (206) und stromabwärts durch die bewegliche Abdeckung (207) begrenzt ist, wobei das Fenster (210) zwischen einer Bahn (202) eines Sekundärstroms (208) und dem Äußeren der Gondel (102) offen ist,
- eine äußere Umkehrtür (104), die eine Mittelebene (xZ) aufweist und zwischen einer geschlossenen Position, in der sie das Fenster (210) verschließt, und einer offenen Position, in der sie das Fenster (210) nicht verschließt, um eine erste Drehachse (60) drehbar an der Struktur montiert ist, und
- einen Antriebsmechanismus (350), der dazu vorgesehen ist, den Übergang der äußeren Umkehrtür (104) von der geschlossenen Position in die offene Position mit dem Übergang der beweglichen Abdeckung (207) von der Schließposition in die Öffnungsposition und umgekehrt zu koordinieren, wobei der Antriebsmechanismus (350) Folgendes umfasst:
- einen einzelnen Zylinder (352), der im Bereich der Mittelebene (xZ) angeordnet ist und ein erstes Ende aufweist, das gelenkig an der Struktur montiert ist,
- eine Welle (502), die eine als dritte Drehachse (356) bezeichnete Achse aufweist, die parallel zur ersten Drehachse (60) und von dieser beabstandet ist, und wobei das zweite Ende des Zylinders (352) gelenkig an der Welle (502) montiert ist,
- einen ersten Gabelkopf (506), der fest mit der äußeren Umkehrtür (104) verbunden und um die dritte Drehachse (356) frei drehbar an der Welle (502) montiert ist, und
- einen zweiten Gabelkopf (508), der fest mit der beweglichen Abdeckung (207) verbunden ist, und wobei jede Flanke des zweiten Gabelkopfs (508) eine Nut (354) aufweist, in der jeweils die Welle (502) parallel zur Mittelebene gleitend montiert ist.

2. Gondel (102) nach Anspruch 1, **dadurch gekennzeichnet, dass** die Welle (502) für jede Nut (354) ein Rad (510) trägt, das in der Nut (354) läuft.

3. Gondel (102) nach einem der vorangehenden Ansprüche, **dadurch gekennzeichnet, dass** die äußere Umkehrtür (104) im Bereich ihrer Mittelebene eine Aussparung (358) aufweist, in der der Zylinder (352) in der geschlossenen Position der äußeren Umkehrtür (104) untergebracht ist.

4. Gondel (102) nach einem der vorangehenden Ansprüche, **dadurch gekennzeichnet, dass** sie Blockiermittel (250) umfasst, die angeordnet sind, um zu verhindern, dass die äußere Umkehrtür (104) eine maximale Öffnungsposition überschreitet.

5. Gondel (102) nach einem der vorangehenden Ansprüche, **dadurch gekennzeichnet, dass** sie eine innere Umkehrtür (106) umfasst, die in Bezug auf die äußere Umkehrtür (104) innerhalb der Gondel (102) angeordnet und zwischen einer eingefahrenen Position, in der sie um die Bahn (202) herum positioniert ist, und einer aktiven Position, in der sie quer zur Bahn (202) positioniert ist, um eine zweite Drehachse (62) drehbar an der Struktur montiert ist, dass der Antriebsmechanismus (350) zwei Schienen (602) umfasst, die fest mit der inneren Umkehrtür (106) verbunden sind und sich parallel zur Translationsrichtung der beweglichen Abdeckung (207) erstrecken, wenn sich die innere Umkehrtür (106) in der eingefahrenen Position befindet, dass jede Schiene (602) ein zur Vorderseite der Gondel (102) gerichtetes distales Ende (608) und ein zur Rückseite der Gondel (102) gerichtetes proximales Ende (610) aufweist, und dass der Antriebsmechanismus (350) für jede Schiene (602) einen Schlitten (604) umfasst, der fest mit der beweglichen Abdeckung (207) verbunden und dazu vorgesehen ist, sich in der Schiene (602) zwischen dem distalen Ende (608) und dem proximalen Ende (610) zu bewegen.

6. Gondel (102) nach Anspruch 5, **dadurch gekennzeichnet, dass** die innere Umkehrtür (106) im Bereich ihrer Mittelebene einen Ausschnitt (702) aufweist, der den Durchgang des Zylinders (352) ermöglicht.

7. Zweistrom-Turbinenstrahltriebwerk (100), umfassend einen Antrieb (20) und eine Gondel (102) nach einem der vorangehenden Ansprüche, die den Antrieb (20) umgibt, wobei eine Bahn (202) eines Sekundärstroms (208) zwischen der Gondel (102) und dem Antrieb (20) begrenzt ist.

8. Luftfahrzeug (10), umfassend zumindest ein Zweistrom-Turbinenstrahltriebwerk (100) nach dem vorangehenden Anspruch.

## Claims

1. Nacelle (102) for a dual-flow turbojet engine (100), said nacelle (102) comprising:
- a structure,
- a fixed cowl (206) fixedly mounted on the structure,
- a mobile cowl (207) mounted to be translationally mobile on the structure in a direction of translation between a position of closure in which it is close to the fixed cowl (206) and a position of opening in which it is away from the fixed cowl (206) towards the rear,
- a window (210) delimited upstream by the fixed cowl (206) and downstream by the mobile cowl (207), said window (210) being open between a jet (202) of a secondary flow (208) and the outside of the nacelle (102),
- an outer thrust-reversing door (104) having a median plane (xZ) and mounted to be rotationally mobile about a first axis of rotation (60) on the structure between a closed position in which it blocks the window (210) and an open position in which it does not block the window (210), and
- a driving mechanism (350) provided to coordinate the transition from the closed position to the open position of the outer thrust-reversing door (104) with the transition from the position of closure to the position of opening of the mobile cowl (207) and vice-versa, said driving mechanism (350) comprising:
- a single power cylinder (352) arranged at the level of the median plane (xZ), having a first end mounted articulated on the structure,
- a shaft (502) having an axis, called third axis of rotation (356), parallel to the first axis of rotation (60) and at a distance therefrom, and where the second end of the power cylinder (352) is mounted articulated on the shaft (502),
- a first yoke joint (506) secured to the outer thrust-reversing door (104) and mounted to be free to rotate on the shaft (502) about the third axis of rotation (356), and
- a second yoke joint (508) secured to the mobile cowl (207) and where each of the two flanks of the second yoke joint (508) has a groove (354) in each of which the shaft (502) is mounted to slide parallel to the median plane.

2. Nacelle (102) according to Claim 1, **characterized in that**, for each groove (354), the shaft (502) bears a wheel (510) which rolls in said groove (354).

3. Nacelle (102) according to one of the preceding claims, **characterized in that** the outer thrust-reversing door (104) has, at the level of its median plane, a void (358) in which the power cylinder (352) lodges in closed position of the outer thrust-reversing door (104).

4. Nacelle (102) according to one of the preceding claims, **characterized in that** it comprises blocking means (250) arranged to prevent the outer thrust-reversing door (104) from exceeding a maximum position of opening.

5. Nacelle (102) according to one of the preceding claims, **characterized in that** it comprises an inner thrust-reversing door (106) arranged inside the nacelle (102) relative to the outer thrust-reversing door (104) and mounted to be rotationally mobile about a second axis of rotation (62) on the structure between a retracted position in which it is positioned around the jet (202) and an active position in which it is positioned across the jet (202), **in that** the driving mechanism (350) comprises two guideways (602) secured to the inner thrust-reversing door (106) and which extend parallel to the direction of translation of the mobile cowl (207) when the inner thrust-reversing door (106) is in retracted position, **in that** each guideway (602) has a distal end (608) oriented towards the front of the nacelle (102) and a proximal end (610) oriented towards the rear of the nacelle (102), and **in that** the driving mechanism (350) comprises, for each guideway (602), a runner (604) secured to the mobile cowl (207) and provided to be able to be displaced in the guideway (602) between the distal end (608) and the proximal end (610) .

6. Nacelle (102) according to Claim 5, **characterized in that** the inner thrust-reversing door (106) has, at the level of its median plane, a notch (702) which allows the passage of the power cylinder (352).

7. Dual-flow turbojet engine (100) comprising an engine (20) and a nacelle (102) according to one of the preceding claims surrounding the engine (20), and in which a jet (202) of a secondary flow (208) is delimited between the nacelle (102) and the engine (20) .

8. Aircraft (10) comprising at least one dual-flow turbojet engine (100) according to the preceding claim.
